# FASCICULE DE BREVET EUROPEEN

(11) **EP 0 500 903 B1**
(45) Date de publication et mention de la délivrance du brevet: **10.08.1994**
(21) Numéro de dépôt: 91916999.5
(22) Date de dépôt: 16.09.1991
(51) Int. Cl.: A47K 11/02

(54) **TOILETTE A COMPOST ROTATIVE FONCTIONNANT A SEC**
ROTIERENDE TROCKEN COMPOSTTOILETTE
DRY ROTATING COMPOST TOILET

(30) Priorité: 19.09.1990 FR 9011774
(43) Date de publication de la demande: 02.09.1992
(73) Titulaire: CENTRE D'EXPERIMENTATION ET DE DOCUMENTATION SUR LES ENERGIES RENOUVELABLES, F-26110 Nyons (FR)
(72) Inventeur: ROCHE, Jean-Louis, F-07200 Aubenas (FR)
(74) Mandataire: Thibault, Jean-Marc
(86) Numéro de dépôt international: FR9100728
(87) Numéro de publication internationale: WO9204851

(56) Documents cités:
- WO-A-90/02720
- CA-A- 1 054 307
- US-A- 3 923 605

## Description

La présente invention concerne le domaine technique général des dispositifs d'assainissement, d'évacuation et de transformation des matières fécales et des urines humaines. L'invention vise plus particulièrement les dispositifs du type ci-dessus fonctionnant à sec, c'est-à-dire ceux qui ne sont pas destinés à être reliés ou raccordés à un réseau d'évacuation général utilisant un fluide ou un liquide porteur, généralement aqueux.

Dans les pays industriellement développés, il est courant d'utiliser l'eau comme moyen d'évacuation et éventuellement comme milieu d'assainissement dans les techniques d'assainissement. Cependant, dans certains cas, il n'est pas possible de bénéficier de la présence d'un réseau d'eau et le recours à une telle technique s'avère impossible. En outre, même dans le cas où le branchement sur un réseau d'évacuation d'eau est techniquement possible, le rejet des déjections humaines peut s'avérer une source de pollution importante, lorsque le sol possède un très faible pouvoir épurateur ou reste tout simplement gelé une grande partie de l'année. Dans de tels cas, il est donc nécessaire d'avoir recours à d'autres techniques d'assainissement qui sont, par exemple, des techniques de stabilisation chimique, d'assèchement électrique ou de compostage statique.

La présente invention entre dans la catégorie des toilettes à compost assurant un compostage des matières fécales humaines, sans recours à un fluide annexe d'évacuation et permettant donc de s'affranchir de l'absence de possibilité de branchement sur un réseau général d'évacuation d'eau.

### TECHNIQUE ANTERIEURE :

Récemment, en dehors des solutions de combustion électrique ou de dégradation chimique, il a été tenté d'améliorer la dégradation des matières fécales par accélération et maîtrise de la digestion aérobie. Divers types de toilettes à compost ont ainsi été proposés et on connaît, par exemple, d'après le brevet **GB-A-1 580 659** un dispositif comportant un siège de toilette associé à un compartiment de compostage et à une réserve d'eau. Le dispositif comprend également un réseau de canalisation et des compartiments annexes de pompage mettant en relation le bac de compostage proprement dit, équipé d'un moyen de brassage, avec un ou plusieurs compartiments annexes de réception des déjections. La conception d'un tel dispositif aboutit à une unité d'un encombrement important, en raison de la succession des bacs et qui nécessite la présence d'un réservoir d'eau additionnel. Par ailleurs, l'agencement interne de ce dispositif est tel qu'il subsiste le long des bacs et canalisations, un grand nombre de zones et surfaces non atteignables par le liquide d'évacuation, ce qui conduit, d'une part, à une hétérogénéité de la digestion aérobie et, d'autre part, à la production d'odeurs désagréables. Un tel dispositif requiert, en outre, la présence d'un réservoir d'eau annexe, qui nécessite un remplissage et un entretien constants. Il doit également être noté que dans certaines régions et, notamment celles où l'eau est rare ou d'accès difficile, l'obligation d'avoir recours à un fluide d'évacuation représente un grave inconvénient. Enfin, l'utilisation d'un bac de compostage statique, simplement muni d'un moyen de brassage, améliore dans une certaine mesure la vitesse de compostage qui reste cependant relativement lente.

On connaît également, d'après la demande **PCT 81-03 487**, une toilette biologique munie d'un siège de toilette disposé au-dessus d'un bac de compostage incluant un moyen de brassage constitué d'une vis sans fin. La toilette est complétée par une unité d'humidification incluant un réservoir d'eau et par des résistances chauffantes destinées à augmenter la température à l'intérieur du bac de compostage. Un tel dispositif souffre de divers inconvénients et, notamment, d'une mauvaise présentation visuelle, dans la mesure où le siège est disposé à l'aplomb du bac de réception qui fait office de bac de compostage. Par ailleurs, malgré la présence d'un microprocesseur chargé de réguler le malaxage, l'humification et le chauffage, la digestion aérobie est relativement longue en raison de l'absence de séparation des phases liquides et solides, ce qui provoque inévitablement l'émission d'odeurs. Un tel dispositif nécessite, par ailleurs, comme le dispositif décrit au paragraphe précédent, la présence d'un réservoir de liquide annexe.

On connaît, enfin, une toilette biologique décrite dans le brevet canadien **CA-A-10 54 307** et qui comporte un siège de toilette disposé au-dessus d'une unité de réception constituée de quatre bacs montés inclinés et rotatifs autour d'un axe commun. Les bacs de réception sont disposés en dehors de l'orifice d'évacuation de la toilette et un dispositif annexe de réflexion constitué d'une plaque mobile, disposé sous le siège est chargé, d'une part, d'assurer le séparation des phases liquides et solides et, d'autre part, de diriger les matières sèches vers les bacs de réception faisant office de bacs de compostage. Un tel dispositif présente également un inconvénient lié à son encombrement et à la présence d'un dispositif de déflexion dont le maintien dans des conditions d'hygiène totales s'avère impossible et dont la position à l'aplomb du siège ne permet pas d'assurer une présentation visuelle soignée de la toilette. Il doit également être noté que le système de déflexion mobile comporte un ensemble mécanique complexe faisant intervenir des ressorts et des articulations sujets à blocage.

### EXPOSE DE L'INVENTION :

L'objet de la présente invention vise donc à remédier aux inconvénients des toilettes à compost de l'art antérieur et à proposer une toilette à compost fonctionnant à sec, apte à entretenir un compostage accéléré, tout en assurant une bonne présentation visuelle du fond de la toilette.

Un autre objet de l'invention est de proposer une toilette à compost permettant d'obtenir une compost de qualité homogène, quelque soit le degré d'utilisation des toilettes.

Un autre objet de l'invention est de proposer une toilette à compost de conception particulièrement simple, robuste et compacte.

Les objets assignés à l'invention sont atteints grâce à une toilette à compost fonctionnant à sec selon la revendication 1.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSINS :

La **fig. 1** montre, selon une vue latérale, un exemple d'une toilette à compost selon l'invention.

La **fig. 2** montre, selon une vue en coupe transversale, une toilette à compost selon l'invention.

La **fig. 3** montre, selon une vue avant, un exemple de réalisation d'une toilette à compost selon l'invention.

La **fig. 4** montre, selon une vue arrière, un détail de réalisation d'un bac de compostage selon l'invention.

### MEILLEURE MANIERE DE REALISER L'INVENTION :

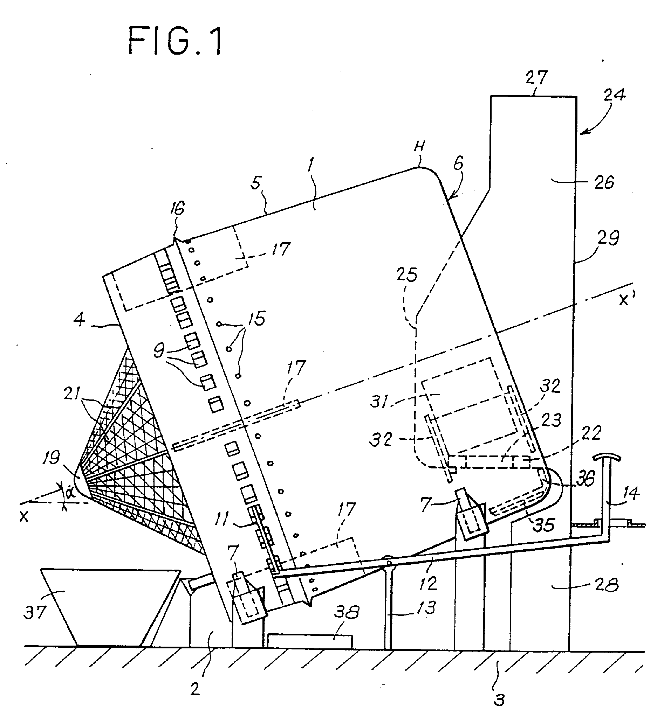

La toilette à compost, représentée à la **fig. 1**, comporte un bac de réception **1** formant bac de compostage reposant sur un bloc support **2** en appui sur le sol **3**. Dans une forme préférée de l'invention, le bac de réception **1** est assimilable à un cylindre comportant un fond **4** à partir duquel s'élèvent des parois **5** constituant des enveloppes périphériques cylindriques externe **5a** et interne **5b**. La section supérieure terminale du cylindre, opposée au fond **4**, est ouverte et constitue l'orifice de réception **6** dudit bac **5**. De préférence également, les parois **5** s'élèvent à une hauteur constante au-dessus du fond **4** et définissent un cylindre de section transversale circulaire. Le bac cylindrique **1** est monté à rotation autour de son axe longitudinal **x-x**′ par l'intermédiaire de galets ou roues **7** en appui sur l'enveloppe externe du bac cylindrique **1** et solidaires du bloc support **2**. Le bac cylindrique **1** est également monté avec une inclinaison telle que son axe longitudinal **x-x**′ forme un angle α avec le plan horizontal, au moins égal à 15 ° et de préférence compris entre 15 et 30 °, l'inclinaison étant telle que le fond **4** est situé plus près du sol **3** que l'orifice **6**, ce dernier représentant la partie la plus haute du cylindre, matérialisée par le point **H**. L'entraînement en rotation du bac **1** autour de son axe longitudinal **x-x′** peut être obtenu à l'aide d'une source d'énergie électrique, par exemple reliée aux galets **7**, ou comme cela est représenté sur la **fig. 1**, à l'aide d'un dispositif mécanique. A cet effet, le bac **1** comporte à sa périphérie, une série de dents **9** solidaires de l'enveloppe externe **5b** du bac **1**, espacées et disposées selon un cercle coaxial à l'axe **x-x**′. Les dents **9** sont destinées à être soumises à l'action d'un bras **11** solidaire de l'extrémité d'un bras de levier **12** articulé sur une barrette d'appui **13** reposant sur le sol. L'autre extrémité du bras de levier **12** est constituée par un organe d'actionnement **14**, de préférence une pédale. Ce moyen d'entraînement est donc destiné à assurer une force tangentielle sur les dents **9** assurant la rotation du bac de réception **1**. Avantageusement, les galets **7** sont équipés d'un système du type à roue libre uni-directeur n'autorisant la rotation du bac **1** que dans un seul sens.

Le bac **1** est également muni d'une série de perforations **15** ménagées à travers les parois **5** de l'enveloppe cylindrique **5**, au voisinage du fond **4** et alignées, de préférence, selon un cercle coaxial à l'axe **x-x′**. Ces perforations sont destinées à l'évacuation des phases liquides susceptibles d'être contenues dans le bac **1**. Les perforations **15** peuvent être associées à une protubérance périphérique et annulaire **16** solidaire de l'enveloppe cylindrique, ladite protubérance étant coaxiale à l'axe **x-x′** et disposée entre le fond **4** et la série des perforations **15**. La protubérance annulaire **16** est destinée à éviter le ruissellement des liquides sur la paroi externe **5b** vers la partie la plus basse du bac cylindrique **1** en canalisant l'évacuation gravitaire des liquides à l'aplomb inférieur le plus bas de ladite protubérance annulaire **16**.

Avantageusement également, la paroi interne **5a** de l'enveloppe cylindrique peut être pourvue d'ailettes de brassage **17** espacées sur la circonférence interne de l'enveloppe et s'étendant radialement. De préférence, le bac de réception **1** est équipé de quatre ailettes de brassage **17**, opposées diamétralement deux à deux et s'étendant sur environ le tiers de la hauteur du bac cylindrique **1** et disposées dans la partie inférieure du cylindre, à proximité du fond **4**.

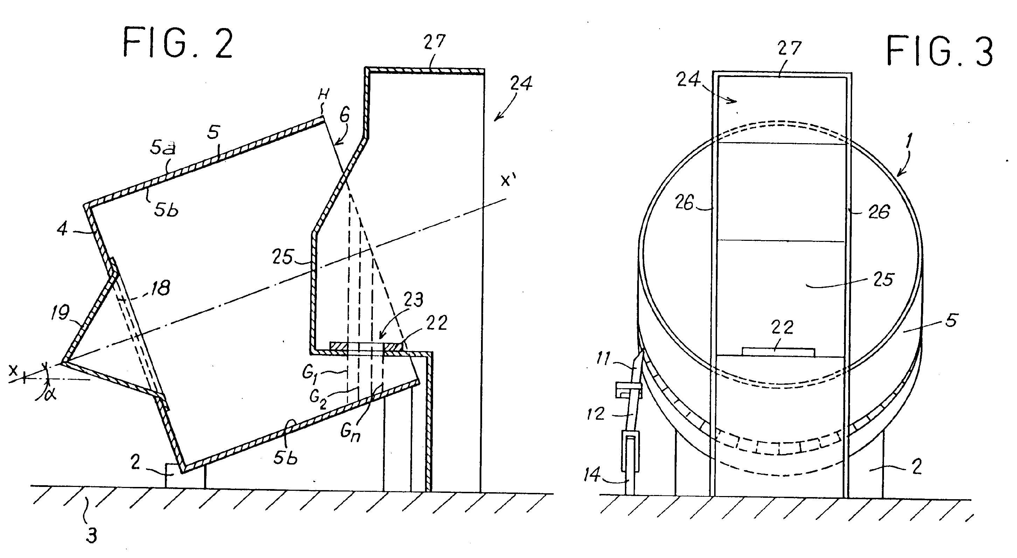

Le fond **4** est constitué d'une paroi circulaire présentant un évidement central **18** (**fig. 2**), de préférence circulaire, pour permettre l'évacuation du contenu du bac cylindrique **1**. L'évidement central **18** est recouvert d'un cône **19** solidaire du bac cylindrique **1**, coaxial à l'axe **x-x′** et muni sur toute ou partie de sa périphérie d'un ensemble de tamis **21** constituant l'enveloppe dudit cône.

La toilette à compost, selon l'invention, est complétée par un siège de toilette **22** délimitant une ouverture d'évacuation gravitaire **23**, de préférence circulaire ou ovale, solidaire d'une cabine **24** incluant une cloison de séparation arrière **25** et deux cloisons latérales **26**. Avantageusement, la cabine **24** est complétée par une cloison supérieure **27**, une embase **28** et une cloison frontale **29**, de manière à constituer une cabine isolant totalement l'utilisateur de l'extérieur. Le bac cylindrique **1** et la cabine **24** incluant le siège **22** sont montés relativement, de telle manière que l'ensemble des génératrices verticales **G₁**, **G₂...G**_{**n**} de l'ouverture d'évacuation **23** se projettent toutes à l'intérieur ou dans le plan définissant l'orifice de réception **6** du bac cylindrique **1**. Un tel agencement est de nature à permettre une évacuation directe par simple gravité des matières fécales et urinaires dans le bac cylindrique **1** directement sur la paroi interne **5b** à l'aplomb de l'ouverture **23**. Dans un tel cas, les déjections tombent directement à l'intérieur du bac de réception **1** sur la paroi interne **5b**, dans une zone limitée à sa partie supérieure correspondant, sur la paroi interne **5b**, à une bande circulaire délimitée par les projections géométriques des génératrices **G₁** à **G**_{**n**}. Avantageusement, comme cela est représenté aux **fig. 1** et **2**, le siège **22** est disposé à l'intérieur du volume défini par le bac cylindrique **1** en étantadossé contre la verticale **25**, cette dernière s'étendant, au moins en partie, à l'intérieur de l'enveloppe cylindrique **5**. De manière avantageuse et en vue de limiter l'encombrement de la toilette, le siège **22** et la cloison verticale **25** sont encastrés à l'intérieur du volume défini par le bac cylindrique **1**, de telle manière que la cloison **25** soit située sensiblement à la verticale du point le plus haut **H** du bac **1**. Bien évidemment, plus l'angle α augmente, plus la verticale passant par le point **H** se projette à L'intérieur du volume du bac **1** sur les parois internes **5b** et plus le volume disponible pour insérer les sièges **22** dans le bac **1** est important.

La toilette à compost conforme à l'invention comporte également, avantageusement, un moyen de dévidement d'une bande de papier sous l'orifice **23** et à l'aplomb de celui-ci, afin d'assurer en permanence une bonne présentation visuelle de l'orifice d'évacuation **23** en mettant hors de vue la paroi interne **5b** du bac cylindrique **1**, amenée à défiler sous l'orifice **23**. A cet effet, le moyen de dévidage peut être constitué d'un rouleau de papier **31** retenu par l'intermédiaire de deux bras **32** mobiles, solidaires d'une paroi latérale **26** de la cabine **24** ou de moyens de support annexes. Le rouleau **31** est monté de manière à être plaqué contre la paroi interne du bac **1**, soit par son propre poids, soit par un système de compression annexe, tel qu'un ressort de compression par exemple. Le rouleau **31** étant disposé latéralement à l'orifice **23** et en appui contre la paroi interne **5b** du bac cylindrique **1**, permet le dévidement du rouleau **31**, lorsque le bac cylindrique **1** est en rotation et assure le déroulement de la bande papier sous l'orifice **23**.

La toilette à compost peut également être équipée d'un dispositif de râclage de la section de la paroi interne **5b** du bac cylindrique **1** défilant sous l'orifice d'avacuation **23**. A cette fin, il est prévu de monter une lame de râclage **35** munie, par exemple à sont extrémité, d'une lamelle en caoutchouc, ladite lame étant fixée à l'extrémité d'une pièce coudée **36** solidaire d'une paroi latérale **26** de la cabine **24**. La lame de râclage **35** est, de manière préférentielle, fixée par rapport à l'orifice **23** du côté opposé à celui sur lequel est monté le rouleau de papier **31**.

La toilette à compost est avantageusement complétée par un récipient **37** disposé sous le cône **19**, afin de récupérer le compost produit dans le bac cylindrique **1** et par un second récipient **38** disposé à l'aplomb des orifices **15** et de la partie annulaire **16**, afin de récupérer la phase liquide susceptible d'être contenue dans le bac cylindrique **1**.

Après avoir utilisé la toilette à compost, l'utilisateur appuie sur la pédale **14**, afin d'entraîner en rotation le bac cylindrique **1** autour de son axe **x-x′**. Cette rotation a pour effet de créer avec la gravité un ensemble de forces contribuant, d'une part, à faciliter la descente des matières fécales et urinaires vers la partie la plus basse du bac cylindrique **1** et, d'autre part, à assurer, par l'intermédiaire des ailettes **17**, un brassage, un mélange et une aération de matières fécales contenues dans le bac **1** conduisant à une digestion aérobie accélérée et par là même à un compostage accéléré. L'aspect dynamique de la rotation du bac cylindrique **1** contribue également à une séparation efficace des phases liquides et solides du contenu du bac cylindrique **1**. Par ailleurs, lors de la rotation du bac cylindrique **1**, une portion propre de papier est déroulée sous l'orifice **23**, tandis que la lame **35** en appui contre la paroi interne du bac cylindrique **1** assure la nettoyage de ladite paroi interne. Il doit également être noté que la possibilité de rotation conférée au bac cylindrique **1** permet une bonne homogénéisation des matières contenues à l'intérieur dudit bac, ce qui contribue à l'obtention d'un compost de qualité relativement stable et homogène. Il doit également être noté que le criblage du compost à travers le tamis **21** s'effectue naturellement lors de la rotation du bac cylindrique **1**, dans la mesure où les particules les plus légères du compost, c'est-à-dire donc les particules en état de décompostion avancée, surnagent relativement au-dessus de la masse de produit contenu à l'intérieur du bac **1**, ce qui conduit à un criblage naturel et différencié du compost.

La toilette à compost selon L'invention présente donc l'avantage de pouvoir fonctionner sans apport d'eau extérieur et de fournir, dans un délai relativement court, un compost de qualité également homogène. L'encastrement du siège **22** à l'intérieur du bac cylindrique **1** permet d'obtenir une toilette à compost relativement compacte et de conception particulièrement simple, puisqu'aucun dispositif annexe d'évacuation n'est nécessaire, les produits s'évacuant par simple gravité. L'agencement choisi, présente d'ailleurs l'avantage d'éliminer pratiquement la présence de foyers ou zones difficilement nettoyables, puisque le trajet entre la zone d'impact et la zone de compostage est constitué d'un simple plan incliné régulièrement nettoyé lors de la rotation du bac incliné.

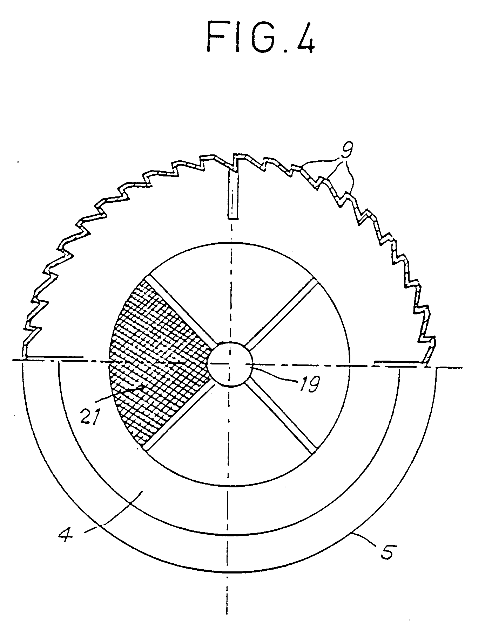

La toilette à compost fonctionnant à sec n'est pas limitée à l'exemple de réalisation montré aux **fig. 1** à **4** et diverses variantes de réalisation peuvent être conçues. Ainsi, le bac cylindrique **1** peut être constitué d'une section variable pouvant avoir une forme ovale ou même polygonale et l'orifice de réception **6** peut présenter une section d'une surface inférieure à celle du fond **4**, en vue de réduire le diamètre dudit orifice. Il est également possible, en vue de réduire les risques d'émission d'odeurs, de munir la cabine **24** d'une jupe circulaire adaptable au jeu de rotation près, sur la périphérie du bac cylindrique **1**, en vue de réaliser un capotage améliorant l'hermétisme du bac cylindrique **1**.

### POSSIBILITE D'APPLICATION INDUSTRIELLE :

L'invention trouve une application particulièrement avantageuse pour les toilettes à compost fonctionnant à sec.

L'invention n'est pas limitée aux exemples décrits et représentés, car diverses modifications peuvent y être apportées sans sortir de son cadre.

## Revendications

1. Toilette à compost fonctionnant à sec comprenant, d'une part, un siège de toilettes (**22**) sensiblement horizontal en liaison avec une ouverture d'évacuation (**23**) gravitaire s'étendant verticalement et, d'autre part, un bac de réception (**1**) monté avec une possibilité de rotation autour d'un axe (**x-x′**) formant un angle (α) par rapport à l'horizontale, ledit bac (**1**) possédant un orifice de réception (**6**) s'étendant au moins en partie sous le siège (**22**), le bac (**1**) étant monté incliné et rotatif autour de son axe de symétrie longitudinal (**x-x′**), lequel forme avec le plan horizontal un angle (α) au moins égal à 15 °, caractérisée en ce que :
le bac (**1**) et le siège (**22**) sont montés relativement de telle manière que l'ensemble des génératrices verticales (**G₁,...G**_{**n**}) de l'ouverture d'évacuation (**23**) se projettent à l'intérieur de l'orifice de réception (**6**) du bac (**1**).

2. Toilette selon la revendication 1, caractérisée en ce que le bac est constitué d'un fond (**4**), à partir duquel s'élèvent des parois (**5**) pour constituer une enveloppe asssimilable à un cylindre ou un polygone, dont la section supérieure terminale, cylindrique ou polygonale est ouverte et délimite l'orifice de réception (**6**).

3. Toilette selon la revendication 2, caractérisée en ce que le siège (**22**) est encastré, par l'intermédiaire de cloisons (**25, 26**), à l'intérieur de l'enveloppe cylindrique ou polygonale et est adossé contre une cloison verticale de séparation (**25**) s'étendant, au moins en partie, à l'intérieur de ladite enveloppe.

4. Toilette selon les revendications 2 et 3, caractérisée en ce que le bac (**1**) est assimilable à un cylindre de section circulaire, le siège (**22**) étant encastré par l'intermédiaire d'une cloison verticale (**25**) de séparation passant par le point le plus haut (**H**) dudit cylindre.

5. Toilette selon l'une des revendications 1 à 4, caractérisée en ce que le bac (**1**) est incliné d'un angle (α) compris entre 15 et 30 °.

6. Toilette selon l'une des revendications 1 à 5, caractérisée en ce que les parois (**5**) du bac (**1**) comportent une série de perforations périphériques (**15**), disposées au voisinage du fond (**4**) pour l'évacuation des phases liquides hors du bac (**1**).

7. Toilette selon l'une revendications précédentes, caractérisée en ce que le bac (**1**) comporte, sur son fond (**4**), des moyens de tamisage du compost constitués d'un cône (**19**) coaxial au bac dont les parois sont munies de tamis (**21**).

8. Toilette selon l'une des revendications précédentes, caractérisée en ce que la paroi interne (**5b**) du bac (**1**) est munie d'ailettes (**17**) de malaxage et de brassage du compost.

9. Toilette selon l'une des revendications précédentes, caractérisée en ce qu'elle comporte un dispositif de déroulement automatique (**31, 32**) d'une bande de papier sous l'ouverture (**23**) comprenant un rouleau dévideur (**31**), maintenu plaqué contre les parois internes du bac (**1**) par l'intermédiaire de deux bras (**32**) mobiles, solidaires de cloisons (**26**) d'encastrement du siège (**22**).

10. Toilette selon l'une des revendications précédentes, caractérisée en ce qu'elle comporte un moyen de râclage (**35**) des parois internes (**5b**) du bac, maintenu plaqué contre lesdites parois et fixé sur des cloisons (**26**) d'encastrement du siège (**22**).

## Patentansprüche

1. Trocken-Kompost-Toilette mit einerseits einem Toilettensitz (22), der im wesentlichen horizontal angeordnet ist in Verbindung mit einer über Schwerkraft funktionierenden Ausbringöffnung (23), die sich vertikal erstreckt, und andererseits mit einem Aufnahmebehälter (1), der mit einer Möglichkeit der Drehung um eine Achse (x-x′) angebracht ist, die einen Winkel (α) bezüglich der Horizontalen bildet, wobei der Behälter (1) eine Aufnahmeöffnung (6) aufweist, die sich wenigstens teilweise unterhalb des Sitzes (22) erstreckt, wobei der Behälter (1) geneigt und drehbar um seine Längs-Symmetrieachse (x-x′) angebracht ist, die mit der horizontalen Ebene einen Winkel (α) von wenigstens 15° bildet, dadurch gekennzeichnet, daß:
der Behälter (1) und der Sitz (22) relativ derart angebracht sind, daß die Anordnung der vertikalen Erzeugenden (G₁...Gₙ) der Ausbringöffnung (23) sich im Inneren der Aufnahmeöffnung (6) des Behälters (1) erstreckt.

2. Toilette nach Anspruch 1, dadurch gekennzeichnet, daß der Behälter aus einem Boden (4) gebildet wird, von dem aus sich Seitenwände (5) erheben, um eine Hülle ähnlich einem Zylinder oder einem Polygon zu bilden, deren oberer Endquerschnitt, zylindrisch oder polygonal, offen ist und die Aufnahmeöffnung (6) begrenzt.

3. Toilette nach Anspruch 2, dadurch gekennzeichnet, daß der Sitz (22) über Trennwände (25, 26) im Inneren der zylindrischen oder polygonalen Hülle eingebaut ist, und angelehnt ist gegen eine vertikale Trennwand (25), die sich wenigstens teilweise im Inneren der Hülle erstreckt.

4. Toilette nach Anspruch 2 und 3, dadurch gekennzeichnet, daß der Behälter (1) einem Zylinder mit kreisförmigem Querschnitt anpaßbar ist, wobei der Sitz (22) mittels einer vertikalen Trennwand (25) eingebaut ist, die durch den höchsten Punkt (H) des Zylinders verläuft.

5. Toilette nach einem der Ansprüche 1 bis 4, dadurch gekennzeichnet, daß der Behälter (1) um einen Winkel (α) geneigt ist, der zwischen 15 und 30° liegt.

6. Toilette nach einem der Ansprüche 1 bis 5, dadurch gekennzeichnet, daß die Seitenwände (5) des Behälters (1) eine Reihe von Umfangsperforationen oder Löchern (15) aufweisen, die in der Nähe des Bodens (4) angeordnet sind, für das Ausbringen von flüssigen Phasen aus dem Behälter (1).

7. Toilette nach einem der vorhergehenden Ansprüche, dadurch gekennzeichnet, daß der Behälter (1) an seinem Boden (4) Siebeinrichtungen des Kompostes aufweist, die aus einem Konus (19) koaxial zum Behälter gebildet werden, dessen Seitenwände mit Sieben (21) versehen sind.

8. Toilette nach einem der vorhergehenden Ansprüche, dadurch gekennzeichnet, daß die innere Seitenwand (5b) des Behälters (1) mit Flügeln (17) zum Mischen bzw. Kneten und zum Umrühren des Kompostes versehen ist.

9. Toilette nach einem der vorhergehenden Ansprüche, dadurch gekennzeichnet, daß sie eine automatische Ablaufvorrichtung (31, 32) eines Papierbandes unter der Öffnung (23) aufweist, die eine Abspultrommel (31) aufweist, die gegen die inneren Seitenwände des Behälters (1) mittels zweier beweglicher Arme (32) gedrückt gehalten wird, die mit den Einbautrennwänden (26) des Sitzes (22) verbunden sind.

10. Toilette nach einem der vorhergehenden Ansprüche, dadurch gekennzeichnet, daß sie eine Schabeinrichtung (35) der inneren Seitenwände (5b) des Behälters aufweist, die gegen die genannten Seitenwände gedrückt gehalten sind und an den Einbautrennwänden (26) des Sitzes (22) befestigt sind.

## Claims

1. Dry-operated composting toilet comprising, on the one hand, a substantially horizontal toilet seat (22) connected with a gravity discharge hole (23) which extends vertically and, on the other hand, a receiving tank (1) mounted for possible rotation about an axis (x-x′) forming an angle (α) with respect to the horizontal, said tank (1) having a receiving orifice (6) which extends at least partly under the seat (22), the tank (1) being mounted so as to be inclined and rotatable about its longitudinal axis of symmetry (x-x′), which axis forms with the horizontal plane an angle (α) at least equal to 15°, characterized in that: the tank (1) and the seat (22) being relatively mounted in such a way that all the vertical generatrices (G₁, .....Gₙ) of the discharge hole (23) project into the receiving orifice (6) of the tank (1).

2. Toilet according to claim 1, characterized in that the tank is composed of a base (4), from which rise walls (5) for constituting a shell forming a cylinder or a polygon, of which the upper section, which is cylindrical or polygonal is open and defines the receiving orifice (6).

3. Toilet according to claim 2, characterized in that the seat (22) is fitted, via walls (25, 26) inside the cylindrical or polygonal envelope and rests against a vertical partition wall (25) which extends, at least partly, inside said shell.

4. Toilet according to claims 2 and 3, characterized in that the tank (1) is like a cylinder of circular cross-section, the seat (22) being fitted via a vertical partition wall (25) passing through the highest point (H) of said cylinder.

5. Toilet according to one of claims 1 to 4, characterized in that the tank (1) is inclined of an angle (α) which is comprised between 15 and 30°.

6. Toilet according to one of claims 1 to 5, characterized in that the walls (5) of the tank (1) comprise a series of peripheral perforations (15), disposed close to the base (4) for evacuating the liquid phases from the tank (1).

7. Toilet according to one of the preceding claims, characterized in that the tank (1) comprises, on its base (4), means for sifting the compost, which means are constituted of a cone (19) coaxial to the tank and of which the walls are equipped with a sieve (21).

8. Toilet according to one of the preceding claims, characterized in that the inner wall (5b) of the tank (1) is provided with blades (17) for mixing and stirring the compost.

9. Toilet according to one of the preceding claims, characterized in that it comprises a device (31, 32) for unwinding a strip of paper under the opening (23), which device comprises an unwinding roll (31), permanently applied against the inner walls of the tank (1) via two movable arms (32) fast with walls (26) in which the seat (22) is fitted.

10. Toilet according to one of the preceding claims, characterized in that it comprises means (35) for scraping the inner walls (5b) of the tank, which means are permanently applied against said walls and fixed on walls (26) in which the seat (22) is fitted.
